# EUROPÄISCHE PATENTSCHRIFT

(11) **EP 2 223 523 B1**
(45) Veröffentlichungstag und Bekanntmachung des Hinweises auf die Patenterteilung: **25.05.2011**
(21) Anmeldenummer: 08862825.0
(22) Anmeldetag: 08.12.2008
(51) Int. Cl.: H04N 1/00, H04M 7/12, H04M 7/00

(54) **VERFAHREN UND EMPFANGSEINRICHTUNG ZUM SYNCHRONISIEREN EINES PAKETORIENTIERT EMPFANGENEN MIT EINEM GEBILDETEN TONSIGNAL**
METHOD AND RECEIVING UNIT FOR SYNCHRONIZING A PACKET-ORIENTED RECEPTION WITH A CALCULATED TONE SIGNAL
PROCÉDÉ ET DISPOSITIF DE RÉCEPTION PERMETTANT LA SYNCHRONISATION D'UN DESTINATAIRE ORIENTÉ PAQUETS AVEC UN SIGNAL SONORE FORMÉ

(30) Priorität: 19.12.2007 DE 102007061312
(43) Veröffentlichungstag der Anmeldung: 01.09.2010
(73) Patentinhaber: Siemens Enterprise Communications GmbH & Co. KG, 81379 München (DE)
(72) Erfinder: FABIAN, Thomas, A-2372 Giesshübl (AT); BAUER, Wolfgang, A-1220 Wien (AT)
(74) Vertreter: Fritzsche, Thomas
(86) Internationale Anmeldenummer: PCT/EP2008/066984
(87) Internationale Veröffentlichungsnummer: WO 2009/077364

(56) Entgegenhaltungen:
- EP-A- 0 946 034
- WO-A-01/28256
- US-B1- 7 233 605
- SCHULZRINNE COLUMBIA UNIVERSITY S PETRACK METATEL H: "RTP Payload for DTMF Digits, Telephony Tones and Telephony Signals; rfc2833.txt" IETF STANDARD, INTERNET ENGINEERING TASK FORCE, IETF, CH, 1. Mai 2000 (2000-05-01), XP015008616 ISSN: 0000-0003 in der Anmeldung erwähnt

## Beschreibung

In Kommunikationsnetzen, insbesondere in Voice over IP Kommunikationsnetzen werden für die Übertragung von Sprache und Tönen bzw. Tonsignalen Komprimierungsverfahren - beispielsweise nach dem ITU- Standard G.729 - eingesetzt, wobei die verwendeten Komprimierungskonzepte auf die Übertragung von Sprache abgestimmt sind. Bei der Übertragung von Mehrfachfrequenztönen - in der Fachwelt als MFV- Wähltöne bekannt - oder Fax/Modem- Signalisierungstönen, kommt es aufgrund des Komprimierungsverfahren unter Umständen zu unerwünschten Veränderungen bestimmter Merkmale der digitalisierten Töne. Um derartige Probleme bzw. die Tonerkennung in der Gegenstelle zu vermeiden, kann für die Übertragung von Fax/Modem- Signalisierungstönen ein standardisiertes Verfahren gemäß RFC 2833 eingesetzt werden, wobei dieses Verfahren für die Übertragung von Tonsignalen ausgestaltet ist, die im Rahmen der Signalisierung für den Aufbau einer Kommunikationsbeziehung zwischen Voice over IP Endgeräten verwendet werden.

Bei einer Übertragung beispielsweise eines

Fax/Modemtonsignals mit 2100 Hz wird sendeseitig gemäß RFC 2833 ein ankommendes Fax-/ Modemtonsignal - bzw. ein digitalisiertes oder analoges Tonsignal - erkannt und unterdrückt. Gleichzeitig wird anstelle des erkannten Fax-/ Modemtonsignals eine Toninformation gebildet und bei einer Voice over IP Übertragung in spezielle RTP- Datenpakete (Real Time Protocol) eingefügt, die anschließend über das Internet oder über Netzwerke mit Internetprotokoll übertragen werden. Die Toninformation erhält gemäß RFC 2833 Angaben über die Tonart, Pegel und Dauer des Fax/ Modemtonsignals. Empfangsseitig wird nach Maßgabe der übermittelten Toninformation mit Hilfe eines Tongenerators das Fax-/Modemtonsignal wieder erzeugt und in das aus den RTP- Datenpaketen dekodierte Signal eingefügt. Da für das Erkennen von zu übermittelnden Fax-/ Modemtonsignalen eine Zeitspanne - typischerweise 20 bis 30 ms - erforderlich ist, können die bis dahin übermittelten Anteile bzw. Bitmuster eines Fax-/Modemtonsignals ohne eine zusätzliche, unerwünschte Verzögerung nicht unterdrückt werden und werden weiter übertragen. Empfangsseitig kann es durch den Übergang zwischen dem im Tongenerator erzeugten und wieder eingefügten Fax-/Modemtonsignal und dem nicht unterdrückten Bitmuster des Fax-/Modemtonsignals zu Signalverläufen kommen, die ein nachfolgender Tondetektor als Phasenumkehr bzw. Phasensprung oder als Amplitudenmodulation fehlinterpretieren kann. Diese Fehlinterpretationen können insbesondere bei Szenarien auftreten, bei denen ein Fax-/Modemtonsignal über mehrere Internetprotokoll- gemäße Netze übertragen wird bzw. mehrere Übertragungen des Fax-/Modemtonsignals nach RFC 2833 vorgesehen sind. Die Fehlinterpretationen führen häufig zu einer erheblichen Störung bzw. zu einem vollständigen Fehlschlagen der Übertragung eines Fax-/Modemtonsignals durch Datenpakete bzw. RTP- Datenpakete.

US 7 233 605 offenbart die Oberbegriffe der unabhängigen Ansprüche.

Die der Erfindung zugrunde liegende Aufgabe besteht darin, die Übertragung von Audioinformation, insbesondere Tonsignalen gemäß dem RFC Standard 2833 zu verbessern. Die Aufgabe wird durch die Merkmale von Anspruch 1 gelöst.

Der wesentliche Aspekt des erfindungsgemäßen Verfahrens ist darin zu sehen, dass
a) sendeseitig das Tonsignal in Datenpakete eingefügt wird,
b) sendeseitig das Tonsignal zusätzlich durch eine das Tonsignal spezifizierende Toninformation in speziellen Datenpaketen übertragen ist,
c) empfangsseitig ein Tongenerator gemäß der übertragenen Toninformation ein Tonsignal generiert,
d) die Phasendifferenz zwischen dem übertragenen und dem generierten Tonsignal vor Beginn des Einfügens des generierten Tons in die Datenpakete ermittelt und mit einer vorgegebenen Phasendifferenz verglichen wird,
e) bei einem Überschreiten der ermittelten über die vorgegebene Phasendifferenz mit Hilfe des Tongenerators die Phase des generierten Tons um einen vorgegebene Phasenwert verändert wird, und
f) Schritt d) und e) solange wiederholt wird, bis die ermittelte unter der vorgegebenen Phasendifferenz liegt, worauf anstelle des übertragenen Tonsignals das generierte Tonsignal in die Datenpakete eingefügt wird.

Ein wesentlicher Vorteil der Erfindung ist darin zu sehen, dass für die Synchronisierung der Phase der im Tongenerator erzeugten Tonsignale nicht ständig ein Phasendetektor aktiv sein muss, sondern die Synchronisation nur erfolgen muss, wenn ein Tonsignal bzw. eine Toninformation empfangen wird und das Einfügen des Tonsignals bevorsteht.

Gemäß einer Ausgestaltung der Erfindung werden jeweils
g) die zwei zuletzt übermittelten Bitmuster des übertragenen Tonsignals, die vor dem vorgesehenen Zeitpunkt des Einfügens des generierten Tonsignals in die Datenpakete erzeugt werden, gespeichert,
h) eine erste Phasendifferenz des zuletzt gespeicherten Bitmusters mit dem aktuell erzeugten Bitmuster des generierten Tonsignals ermittelt,
i) eine zweite Phasendifferenz des vorhergehend gespeicherten Bitmusters mit dem aktuell erzeugten vorhergehenden Bitmuster des generierten Tonsignals ermittelt,
j) die ermittelte erste und zweite Phasendifferenz mit einer vorgegebenen Phasendifferenz verglichen,
k) bei einem Überschreiten der ermittelten ersten und zweiten über die vorgegebene Phasendifferenz mit Hilfe des Tongenerators die Phase des generierten Tons um einen vorgegebene Phasenwert geändert, und
1) dass Schritt g) bis k) solange wiederholt wird, bis die erste oder zweite ermittelte unter der vorgegebenen Phasendifferenz liegt.

Ein Vorteil dieser Ausgestaltung besteht darin, dass nicht mehrere Bitmuster, sondern nur jeweils zwei Bitmuster bzw. Abtastmuster - in der Fachwelt auch als Samples bekannt - gespeichert werden müssen, wodurch kurze Bearbeitungszeiten für den Synchronisationsvorgang erreicht werden.

Weitere vorteilhafte Weiterbildungen des erfindungsgemäßen Verfahrens und eine Ausgestaltung einer erfindungsgemäßen A-nalyseeinheit sind weiteren Ansprüchen zu entnehmen.

Im Folgenden werden die Erfindung und deren Weiterbildungen anhand zweier zeichnerischen Darstellungen näher erläutert. Dabei zeigen
- Figur 1: in einem Blockschaltbild eine Kommunikationsanord- nung, in der das erfindungsgemäßen Verfahrens einge- setzt wird, und
- Figur 2: in einem weiteren Blockschaltbild eine Anordnung zur Durchführung des erfindungsgemäßen Verfahrens in ei- ner Empfangseinheit gemäß Figur 1.

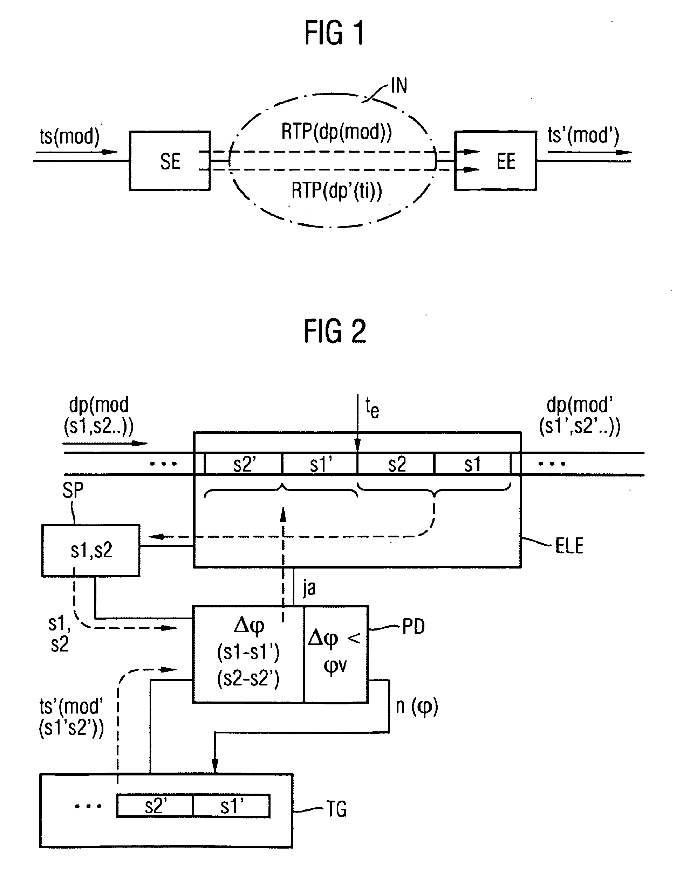

Figur 1 zeigt eine Sende- und eine Empfangseinheit SE,EE, die über das Internet IN Kommunikationsbeziehungen aufbauen können. Die Sende- und Empfangseinheit SE, EE sind beispielsweise durch Gateways realisiert, mit deren Hilfe über das Internet IN im Rahmen eine Kommunikationsbeziehung, im Ausführungsbeispiel eine Voice over IP Verbindung, Sprachinformation und Signalisierungsinformation übertragen werden.

Für das Ausführungsbeispiel sei angenommen, dass die Datenpakete dp durch Voice over IP - Datenpakete dp gebildet sind, die von der Sendeeinheit SE über das Internet IN - alternativ ein lokales Netzwerk mit Internetprotokoll - an die Empfangseinheit EE übertragen werden. Für das Ausführungsbeispiel sei weiterhin angenommen, dass die Datenpakete dp gemäß dem RTP - Protokoll (Real Time Protokoll) übertragen werden. Das RTP-Protokoll ist im RFC Standard 1889 bzw. 3550 definiert und stellt ein Protokoll für die kontinuierliche Übertragung von Echtzeitdaten, z.B. audiovisuellen bzw. Multimediadaten über IP- basierte Netwerke dar.

Neben der in den Datenpaketen dp übermittelten Nutzinformation - beispielsweise bei Voice over IP- Datenpaketen Sprachinformation - sollen auch an die Sendeeinheit SE herangeführte Tonsignale ts, beispielsweise MFV- Tonsignale oder Fax-/ Modemtonsignale übertragen werden. Die für die Komprimierung vorgesehenen Verfahren sind insbesondere auf die Komprimierung von Sprachsignalen abgestimmt. Bei der Komprimierung von Tonsignalen ts werden nicht alle Tonmerkmale unverändert übertragen. Um diese Nachteile zu verweiden bzw. die Erkennung der Töne in der Empfangseinheit zu vereinfachen, ist ein Verfahren nach dem RFC Standard 2833 vorgesehen. Im weiteren wird das erfindungsgemäße Verfahren anhand der Übertragung eines Fax-/Modemtonsignals mod erläutert, wobei ein Modemtonsignal beispielsweise durch ein 2100 Hz Tonsignal repräsentiert ist, mit dessen Hilfe für die Sprachübertragung vorgesehene Echocanceller abgeschaltet werden, um so einen Übertragungskanal in einen Datenübertragungsmodus steuern.

Gemäß dem Standard werden senderseitig die zu übertragenden Signale auf das Vorliegen von Tonsignalen, d.h. eines Fax-/ Modemtonsignals mod untersucht und nach einem Erkennen wird das Übertragen des Fax-/Modemtonsignals mod unterdrückt. Dies bedeutet, dass kein Datenpaket dp mit einem erkannten Fax-/Modemtonsignal mehr ausgesandt wird. Durch das Erkennen des Fax-/Modemsignals werden auch dessen Eigenschaften hinsichtlich Frequenz, Pegel und Tonart erkannt, die in einer Tonin-formation ti zusammengefasst werden. Anstelle des erkannten Fax-/Modemsignals wird nun ein separates Datenpaket dp' übermittelt, in das die Toninformation ti eingefügt wird. Gemäß dem Standard.RFC2833 wird empfangsseitig nach Empfang der Toninformation ti mit Hilfe eines Tongenerators TG - siehe Figur 2 - gemäß der Toninformation ti - Frequenz, Pegel, Tonart - das Fax-/Modemsignal mod wieder gebildet und in Datenpakete dp mit Hilfe einer Einfüge-/ Leseeinheit ELE - siehe Figur 2 - in den Datenpaketstrom eingefügt.

Bei der standardgemäßen Vorgehensweise ist eine Zeitspanne für das Erkennen eines Tonsignals ts bzw. Fax-/Modemsignals mod erforderlich - üblicherweise 20 bis 30 ms. In dieser Zeitspanne wird senderseitig das Fax-/Modemsignal mod in Datenpakete dp eingefügt, bevor eine Unterdrückung des Fax-/Modemsignals wirksam wird. Zusätzlich wird auch die Toninformation ti durch ein separates Datenpaket dp übertragen. Empfängerseitig kann es nun bei einem Einfügen des mittels des Tongenerators TG erzeugten Signals zu einem Phasensprung oder einer Phasenumkehr zu dem Fax-/Modemsignal mod kommen, das nicht rechtzeitig unterdrückt werden konnte. Dieser Phasensprung kann in nachfolgenden Tondetektoren zu erheblichen Störungen führen. Zur Vermeidung dieser Störungen ist das besonders wirtschaftlich zu realisierende erfindungsgemäße Verfahren vorgesehen.

Erfindungsgemäß wird nun senderseitig nicht mehr nach einem Erkennen eines Tonsignals ts bzw. Fax-/Modemsignals mod dieses unterdrückt, sondern weiter übertragen - in Figur 1 durch einen mit dp(mod) bezeichneten Pfeil angedeutet. Anschließend werden gemäß dem Standard RFC 2833 aus dem erkannten Fax-/Modemsignal mod seine Parameter wie Tonart, Pegel und Frequenz abgeleitet, in eine Toninformation ti zusammengefasst und in ein separates Datenpaket dp eingefügt - in Figur 1 durch einen mit dp'(mod) bezeichneten Pfeil angedeutet.

Figur 2 zeigt eine mögliche Anordnung zur Durchführung des erfindungsgemäßen Verfahrens in der Empfangseinheit EE. Mit einer Einfüge-/ Leseeinheit ELE, an die von der Sendeeinheit SE Datenpakete dp übermittelt werden, wird die Toninformation ti aus dem separaten Datenpaket dp' gelesen und an den Tongenerator TG weitergeleitet. In diesem wird nun das Bilden den Fax-/Modemsignals mod' eingeleitet. Das Fax-/Modemsignal mod' wird durch einzelne Bitmuster s bzw. - in der Fachwelt auch als Samples bekannt - gebildet und diese Bitmuster s sollen anstelle des übertragenen Fax-/Modemsignals mod zu einem vorgegebenen Zeitpunkt tₑ in den Bitmusterstrom der Datenpakete dp eingefügt werden.

Da die Einfügung der vom Taktgenerator TG erzeugten Bitmuster s ohne oder mit geringem Phasensprung erfolgen muss, wird die Phasenlage der vor dem Zeitpunkt tₑ übertragenen Bitmuster s des übertragenen Fax-/Modemsignals mod ermittelt. Dies wird dadurch bewirkt, dass ein erstes und zweites vor dem Zeitpunkt tₓ übertragene Bitmuster s1,s2 durch die Einfüge-/ Leseeinheit ELE gelesen werden und in einem Speicher SP gespeichert werden. Vom Speicher SP werden die beiden Bitmuster s1,s2 von einem Phasendetektor PD gelesen und hinsichtlich ihrer Phasenlage mit zwei Bitmustern s1', s2' verglichen, die vom Tongenerator TG erzeugt wurden und ab dem Zeitpunkt tₓ in die Datenpakete dp eingefügt werden sollen. Im Phasendetektor PD werden jeweils die Phasendifferenzen Δϕ der ersten Bitmuster s1,s1' und der zweiten Bitmuster s2,s2' ermittelt und anschließend mit einer vorgegebenen Phasendifferenz ϕv verglichen. Die vorgegebene Phasendifferenz ϕv stellt eine maximale Phasendifferenz dar, die das übertragende Fax-/Modemsignal mod mit dem im Tongenerator TG erzeugten Fax-/Modemsignal mod' aufweisen darf bzw. die noch toleriert werden kann, um Störungen den nachfolgenden Tondetektoren zu vermeiden.

Für das Ausführungsbeispiel sei angenommen, dass die Phasendifferenz Δϕ größer als die vorgegebenen Phasendifferenz ϕv ist und somit, um einen zu hohen Phasensprung zu vermeiden, die vom Tongenerator TG erzeugten beiden Bitmuster s1',s2' sowie die folgenden Bitmuster nicht zum Zeitpunkt teₓ in die Datenpakete dp eingefügt werden können.

Erfindungsgemäß wird die Phase der von Tongenerator TG erzeugten Bitmuster s' bzw. des Fax-/Modemsignal mod' um eine vorgegebene Phase ϕ verändert bzw. verschoben. Die vorgegebene Phase ϕ wird derart gewählt, dass bei einer schrittweisen Veränderung der vom Taktgenerator TG erzeugten Bitmuster s' um die vorgegebene Phase ϕ, eine Unterschreiten der vorgegebene Phasendifferenz Δϕ erreicht werden kann, ohne dass eine erneute Phasenumkehr stattfindet.

Anschließend wird ein weiterer Einfügezeitpunkt tₑ bestimmt und die beiden nächsten vor dem Einfügezeitpunkt tₑ übertragenen Bitmuster s von der Einfüge-/ Leseeinheit ELE gelesen und im Speicher SP gespeichert - in der Figur nicht dargestellt. Für den Phasenvergleich mit den gespeicherten Bitmustern s werden die zwei vor einem weiteren Einfügezeitpunkt tₑ vom Tongenerator TG erzeugten Bitmuster s' verwendet. Liegt die ermittelte Phasendifferenz weiter über der vorgegebenen Phasendifferenz Δϕ, so werden die vorhergehend beschriebenen Verfahrenschritte einschließlich des jeweiligen Veränderns der vom Tongenerator TG erzeugten Bitmuster s' mit der vorgegebenen Phase ϕ solange wiederholt, bis die Phasendifferenz Δϕ kleiner als die vorgegebenen Phasendifferenz ϕv ist - diese Wiederholvorgänge sind nicht in der Figur nicht dargestellt.

Wird durch den Phasendetektor festgestellt, dass die Phasendifferenz Δϕ kleiner als die vorgegebenen Phasendifferenz ϕv ist, so werden ab dem Einfügezeitpunkt tₑ anstelle der Bitmuster s1,s2 des übertragenen Fax-/ Modemsignals mod die Bitmuster s1',s2' und auch weitere Bitmuster s' des im Taktgenerator TG erzeugten Fax-/ Modemsignals mod' mit Hilfe der Einfüge-/ Leseeinheit ELE in die Datenpakete dp eingefügt - in der Figur ist aus Gründen der Übersichtlichkeit nur die Variante dargestellt, bei der nach einem einmaligen Vergleich die Phasendifferenz Δϕ kleiner als die vorgegebenen Phasendifferenz ϕv ist und somit die im Taktgenerator TG gebildeten Bitmuster s1', s2'... sofort ab dem Einfügezeitpunkt tₑ in die Datenpakete dp eingefügt werden können.

Folgt kein weiterer Abschnitt gemäß einem Internet-Protoll, so können die Bitmuster s1,s2.. bzw. das Fax-/Modemsignal mod' auch in anderen Protokollen übertragen werden oder auch in ein analoges Fax-/Modemsignal mod' gewandelt werden.

Das erfindungsgemäße Verfahren ist nicht auf das Ausführungsbeispiel begrenzt, sondern kann in allen Sende- und Empfangseinheiten eingesetzt werden, bei denen Tonsignale nach dem RFC Standard 2833 oder ähnlichen Verfahren übertragen werden.

## Patentansprüche

1. Verfahren zum Synchronisieren eines in Datenpaketen (dp) übertragenen Tonsignals (ts(mod)),
a) bei dem das Tonsignal (ts) in die übertragenen Datenpakete (dp) eingefügt wird,
b) bei dem das Tonsignal (ts) durch ein das Tonsignal (ts) spezifizierende Toninformation (ti) in speziellen Datenpaketen (dp') übertragen wird,
c) bei dem ein Tongenerator (TG) gemäß der übertragenen Toninformation (ti) das Tonsignal (ts') generiert, **dadurch gekennzeichnet, dass**
d) die Phasendifferenz (Δϕ) zwischen dem übertragenen Tonsignal (ts) und dem generierten Tonsignal (ts') vor Beginn des Einfügens des generierten Tonsignals (ts') in die Datenpakete (dp) ermittelt und mit einer vorgegebenen Phasendifferenz (ϕv) verglichen wird,
e) bei einem Überschreiten der ermittelten über die vorgegebene Phasendifferenz (Δϕ,ϕΔ) mit Hilfe des Tongenerators (TG) die Phase des generierten Tonsignals (ts') um eine vorgegebene Phase (ϕ) geändert wird, und
f) Schritt d) und e) solange wiederholt wird, bis die ermittelte unter der vorgegebenen Phasendifferenz (Δϕ, ϕv) liegt, worauf anstelle des übertragenen Tonsignals (ts) das generierte Tonsignal (ts) in die Datenpakete (dp) eingefügt wird.

2. Verfahren nach Anspruch 1, **dadurch gekennzeichnet**,
g) dass jeweils die zwei zuletzt übermittelten Bitmuster (s1,s2) des übertragenen Tonsignals (ts), die vor dem vorgesehenen Einfügezeitpunkt (tₑ) des generierten Tonsignals (ts') in die Datenpakete (dp) erzeugt werden, gespeichert werden,
h) dass eine erste Phasendifferenz (Δϕ) des zuletzt gespeicherten Bitmusters (s2) mit dem zuletzt vor dem Einfügezeitpunkt (tₑ) erzeugten Bitmuster (s2') des generierten Tonsignals (ts') ermittelt wird,
i) dass eine zweite Phasendifferenz (Δϕ) des vorhergehend gespeicherten Bitmusters (s1) mit dem vor dem Einfügezeitpunkt (tₑ) erzeugten, vorhergehenden Bitmuster (s1) des generierten Ton ermittelt wird,
j) dass die ermittelte erste und zweite Phasendifferenz (Δϕ) mit einer vorgegebenen Phasendifferenz (ϕv) verglichen wird,
k) dass bei einem Überschreiten der ermittelten ersten und zweiten über die vorgegebene Phasendifferenz ((ϕv) mit Hilfe des Tongenerators (TG) die Phase des generierten Tonsignals (ts') um einen vorgegebene Phasenwert (ϕ) verschoben wird,
l) dass Schritt g) bis k) solange wiederholt wird, bis die erste oder zweite ermittelte unter der vorgegebenen Phasendifferenz (Δϕ) liegt.

3. Verfahren nach Anspruch 2,
**dadurch gekennzeichnet**,
das der Vergleich der ermittelten zweiten Phasendifferenz (Δϕ) mit der vorgegebenen Phasendifferenz (ϕv) priorisiert wird.

4. Verfahren einem der vorhergehenden Ansprüche,
**dadurch gekennzeichnet,**
**dass** die Bildung und Übertragung der Toninformation (ti) nach dem RFC- Standard 2833, Version May 2000, erfolgt.

5. Verfahren einem der vorhergehenden Ansprüche,
**dadurch gekennzeichnet,**
**dass** die Datenpakete (dp) mit dem RTP- Protokoll RTP gemäß dem RFC- Standard 3511, Version April 2003, gebildet und übertragen werden.

6. Verfahren einem der vorhergehenden Ansprüche,
**dadurch gekennzeichnet,**
**dass** das Tonsignal (ts,ts') durch ein Fax/Modemtonsignal (mod) repräsentiert ist.

7. Empfangseinrichtung zum Synchronisieren eines in Datenpaketen (dp) übertragenen Tonsignals (ts(mod)),
a) mit einer Empfangseinheit (EE) zum Empfangen eines in Datenpakete (dp) eingefügten Tonsignals (ts), sowie
b) zum Empfang einer in speziellen Datenpaketen (dp') übertragenen, das Tonsignal (ts) spezifizierende Toninformation (ti),
c) mit einem Tongenerator (TG) zum Generieren des gemäß der übertragenen Toninformation (ti) gebildeten Tonsignals (ts'), **gekennzeichnet durch**
d) einen Phasendetektor (PD) zum Ermitteln der Phasendifferenz (Δϕ) zwischen dem übertragenen Tonsignal (ts) und dem generierten Tonsignal (ts') vor Beginn des Einfügens des generierten Tonsignals (ts') in die Datenpakete (dp) und zum Vergleich mit einer vorgegebenen Phasendifferenz (ϕv), wobei
e) der Tongenerator (TG) derart ausgestaltet ist, dass bei einem Überschreiten der ermittelten über die vorgegebene Phasendifferenz (Δϕ, ϕv) die Phase (ϕ) des generierten Tonsignals (ts') um eine vorgegebene Phase (ϕv) geändert wird, und
f) die Empfangseinrichtung derart ausgestaltet ist, dass Schritt d) und e) solange wiederholt wird, bis die ermittelte unter der vorgegebenen Phasendifferenz (Δϕ,ϕv) liegt, und dass anstelle des übertragenen Tonsignals (ts) das generierte Tonsignal (ts) in die Datenpakete (dp) eingefügt wird.

8. Empfangseinrichtung nach Anspruch 8, ausgestaltet mit
g) einer Einfüge-/ Leseeinheit (ELE) und einem Speicher (SP) zum Speichern der jeweils zwei zuletzt übermittelten Bitmuster (s1,s2) des übertragenen Tonsignals (ts), die vor dem vorgesehenen Einfügezeitpunkt (tₑ) des generierten Tonsignals (ts') in die Datenpakete (dp) erzeugt werden,
h) mit einem Phasendetektor (PD)
zum Ermitteln einer ersten Phasendifferenz (Δϕ) des zuletzt gespeicherten Bitmusters (s2) mit dem zuletzt vor dem Einfügezeitpunkt (tₑ) erzeugten Bitmuster (s2') des generierten Tonsignals (ts'), und
i) zum Ermitteln einer zweiten Phasendifferenz (Δϕ) des vorhergehend gespeicherten Bitmusters (s1) mit dem vor dem Einfügezeitpunkt (tₑ) erzeugten, vorhergehenden Bitmuster (s1) des generierten Ton, sowie
j) zum Vergleich der ermittelten ersten und zweiten Phasendifferenz (Δϕ) mit einer vorgegebenen Phasendifferenz (ϕv),
k) der Tongenerator (TG) derart ausgestaltet ist, dass bei einem Überschreiten der ermittelten ersten und zweiten über die vorgegebene Phasendifferenz ((ϕv) die Phase des generierten Tonsignals (ts') um einen vorgegebene Phasenwert (ϕ) verschoben wird, und
1) die Einfüge-/ Leseeinheit (ELE), der Speicher (SP), der Phasendetektor (PD) und der Tongenerator (TG) derart ausgestaltet ist, dass Schritt g) bis k) solange wiederholt wird, bis die erste oder zweite ermittelte unter der vorgegebenen Phasendifferenz (Δϕ) liegt.

9. Empfangseinrichtung nach Anspruch 8 oder 9, derart ausgestaltet,
dass eine nach dem RFC- Standard 2833, version May 2000, gebildete Toninformation (ti) empfangen werden kann.

## Claims

1. Method for synchronising a tone signal (ts(mod)) transmitted in data packets (dp),
a) in which the tone signal (ts) is inserted into the transmitted data packets (dp),
b) in which the tone signal (ts) is transmitted in special data packets (dp') by a tone information (ti) specifying the tone signal (ts),
c) in which a tone generator (TG) generates the tone signal (ts') according to the transmitted tone information (ti),
d) in which the phase difference (δϕ) between the transmitted tone signal (ts) and the generated tone signal (ts') is ascertained before the start of insertion of the generated tone signal (ts') into the data packets (dp) and compared with a predetermined phase difference (ϕv),
e) in which, if the ascertained exceeds the predetermined phase difference (δϕ ϕv), the phase of the generated tone signal (ts') is changed by a predetermined phase (ϕ) with the aid of the tone generator (TG), whereby
f) step d) and e) is repeated until the ascertained is below the predetermined phase difference (δϕ ϕv), whereupon instead of the transmitted tone signal (ts) the generated tone signal (ts) is inserted into the data packets (dp).

2. Method according to Claim 1,
**characterised in that**
g) the two last transmitted bit patterns (s1,s2) of the transmitted tone signal (ts) which are generated before the predetermined insertion time (tₑ) of the generated tone signal (ts') into the data packets (dp), are stored,
h) a first phase difference (δϕ) of the last stored bit pattern (s2) is ascertained with the last bit pattern (s2') of the generated tone signal (ts') generated before the insertion time (tₑ),
i) a second phase difference (δϕ) of the previously stored bit pattern (s1) is ascertained with the previous bit pattern (s1) of the generated tone *[sic]* generated before the insertion time (tₑ),
j) the ascertained first and second phase difference (δϕ) is compared with a predetermined phase difference (ϕv),
k) if the ascertained first and second exceed the predetermined phase difference (ϕv), the phase of the generated tone signal (ts') is shifted by a predetermined phase value (ϕ) with the aid of the tone generator (TG),
I) step g) to k) is repeated until the first or second ascertained is below the predetermined phase difference (δϕ).

3. Method according to Claim 2,
**characterised in that**
the comparison of the ascertained second phase difference (δϕ) with the predetermined phase difference (ϕv) is prioritised.

4. Method according to any one of the preceding claims, **characterised in that**
the formation and transmission of the tone information (ti) is carried out according to the RFC Standard 2833 Version May 2000.

5. Method according to any one of the preceding claims, **characterised in that**
the data packets (dp) are formed and transmitted with the RTP protocol (RTP) according to the RFC Standard 3511 Version April 2003.

6. Method according to any one of the preceding claims, **characterised in that** the tone signal (ts,ts') is represented by a fax/modem tone signal (mod).

7. Receiver for synchronising a tone signal (ts(mod)) transmitted in data packets (dp),
a) with a receiver unit (EE) for receiving a tone signal (ts) inserted in data packets (dp), and
b) for receiving a tone information (ti) transmitted in special data packets (dp') and specifying the tone signal (ts),
c) with a tone generator (TG) for generating the tone signal (ts') formed according to the transmitted tone information (ti),
d) **characterised by** a phase detector (PD) for ascertaining the phase difference (δϕ) between the transmitted tone signal (ts) and the generated tone signal (ts') before the start of the insertion of the generated tone signal (ts') into the data packets (dp) and for comparing with a predetermined phase difference (ϕv), wherein
e) the tone generator (TG) is configured in such a way that if the ascertained exceeds the predetermined phase difference (δp (ϕv) the phase (ϕ) of the generated tone signal (ts') is changed by a predetermined phase (ϕv), and
f) the receiver is configured in such a way that step d) and e) is repeated until the ascertained is below the predetermined phase difference (δϕ ϕv), and instead of the transmitted tone signal (ts) the generated tone signal (ts) is inserted into the data packets (dp).

8. Receiver according to Claim 8, configured with
g) an insertion/reader unit (ELE) and a memory (SP) for storing the two last transmitted bit patterns (s1,s2) of the transmitted tone signal (ts) which are generated before the predetermined insertion time (tₑ) of the generated tone signal (ts') into the data packets (dp),
h) a phase detector (PD) for ascertaining a first phase difference (δϕ) of the last stored bit pattern (s2) with the last bit pattern (s2') of the generated tone signal (ts') generated before the insertion time (tₑ), and
i) for ascertaining a second phase difference (δϕ) of the previously stored bit pattern (s1) with the previous bit pattern (s1) of the generated tone *[sic]* generated before the insertion time (tₑ), as well as
j) for comparing the ascertained first and second phase difference (δϕ) with a predetermined phase difference (ϕv),
k) the tone generator (TG) being configured such that if the ascertained first and second exceed the predetermined phase difference (ϕv) the phase of the generated tone signal (ts') is shifted by a predetermined phase value (ϕ), and
I) the insertion/reading unit (ELE), the memory (SP), the phase detector (PD) and the tone generator (TG) is *[sic]* configured such that step g) to k) is repeated until the first or second ascertained is below the predetermined phase difference (δϕ).

9. Receiver according to Claim 8 or 9 configured such that a tone information (ti) formed according to RFC Standard 2833 can be received.

## Revendications

1. Procédé de synchronisation d'un signal sonore (ts(mod)) transmis dans des paquets de données (dp),
a) dans lequel le signal sonore (ts) est inséré dans les paquets de données (dp) transmis,
b) dans lequel le signal sonore (ts) est transmis par une information sonore (ti), spécifiant le signal sonore (ts), dans des paquets de données spéciaux (dp'),
c) dans lequel un générateur de sons (TG) génère le signal sonore (ts') selon l'information sonore (ti) transmise,
**caractérisé en ce que**
d) la différence de phase (Δϕ) entre le signal sonore transmis (ts) et le signal sonore généré (ts') est déterminée avant l'insertion du signal sonore généré (ts') dans les paquets de données (dp) et est comparée à une différence de phase prédéfinie (ϕv),
e) si la différence de phase déterminée (Δϕ) est supérieure à la différence de phase prédéfinie (ϕv), la phase du signal sonore généré (ts') est modifiée d'une phase prédéfinie (ϕ) à l'aide du générateur de sons (TG), et
f) les étapes d) et e) sont répétées jusqu'à ce que la différence de phase déterminée (Δϕ) soit inférieure à la différence de phase prédéterminée (ϕv), à la suite de quoi le signal sonore généré (ts) est inséré dans les paquets de données (dp) à la place du signal sonore transmis (ts).

2. Procédé selon la revendication 1,
**caractérisé**,
g) en ce que, à chaque fois, les deux combinaisons de bits communiquées en dernier (s1, s2) du signal sonore transmis (ts), qui sont générées avant l'instant d'insertion prévu (te) du signal sonore généré (ts') dans les paquets de données (dp), sont mises en mémoire,
h) en ce que l'on détermine une première différence de phase (Δϕ) entre la combinaison de bits mémorisée en dernier (s2) et la combinaison de bits (s2'), du signal sonore généré (ts'), générée en dernier avant l'instant d'insertion (te),
i) en ce que l'on détermine une deuxième différence de phase (Δϕ) entre la combinaison de bits mémorisée précédemment (s1) et la combinaison de bits (s1) précédente, du son généré, générée avant l'instant d'insertion (te),
j) en ce que les première et deuxième différences de phase déterminée (Δϕ) sont comparées à une différence de phase prédéfinie (ϕv),
k) en ce que, si les première et deuxième différences de phase (Δϕ) sont supérieures à la différence de phase prédéfinie (ϕv), la phase du signal sonore généré (ts') est décalée d'une valeur de phase prédéfinie (ϕ) à l'aide du générateur de sons (TG),
1) en ce que les étapes g) à k) sont répétées jusqu'à ce que la première ou la deuxième différence de phase déterminée (Δϕ) soit inférieure à la différence de phase prédéfinie (ϕv).

3. Procédé selon la revendication 2,
**caractérisé en ce que**,
la comparaison des deux différences de phase déterminées (Δϕ) avec la différence de phase prédéfinie (ϕv) est priorisée.

4. Procédé selon l'une quelconque des revendications précédentes,
**caractérisé en ce que**,
la formation et la transmission de l'information sonore (ti) ont lieu conformément au standard RFC 2833, version de mai 2000.

5. Procédé selon l'une quelconque des revendications précédentes,
**caractérisé en ce que**,
les paquets de données (dp) sont formés et transmis avec le protocole en temps réel (RTP) conformément au standard RFC 3511, version d'avril 2003.

6. Procédé selon l'une quelconque des revendications précédentes, **caractérisé en ce que**,
le signal sonore (ts, ts') est représenté par un signal sonore de télécopieur/modem (mod).

7. Dispositif de réception permettant de synchroniser un signal sonore (ts(mod)) transmis dans un paquet de données (dp),
a) pourvu d'une unité de réception (EE) destinée à recevoir un signal sonore (ts) inséré dans un paquet de données (dp) ainsi que
b) à recevoir une information sonore (ti) spécifiant le signal sonore (ts) et transmise dans des paquets de données spéciaux (dp'),
c) pourvu d'un générateur de sons (TG) destiné à générer le signal sonore (ts') formé selon l'information sonore transmise (ti),
**caractérisé par**
d) un détecteur de phase (PD) destiné à déterminer la différence de phase (Δϕ) entre le signal sonore transmis (ts) et le signal sonore généré (ts') avant le début de l'insertion du signal sonore généré (ts') dans les paquets de données (dp) et destiné à la comparer avec une différence de phase prédéfinie (ϕv),
e) le générateur de sons (TG) étant conçu de manière telle que, si la différence de phase déterminée (Δϕ) est supérieure à la différence de phase prédéfinie (ϕv), la phase (ϕ) du signal sonore généré (ts') soit modifiée d'une phase prédéfinie (ϕv), et
f) le dispositif de réception étant conçu de manière telle que les étapes d) et e) soient répétées jusqu'à ce que la différence de phase déterminée (Δϕ) soit inférieure à la différence de phase prédéfinie (ϕv) et que le signal sonore généré (ts) soit inséré dans les paquets de données (dp) à la place du signal sonore (ts)transmis.

8. Dispositif de réception selon la revendication 8, équipé
g) d'une unité d'insertion/lecture (ELE) et d'une mémoire (SP) destinée à mémoriser les deux combinaisons de bits (s1, s2), du signal sonore transmis (ts), communiquées en dernier, qui sont générées avant l'instant d'insertion prévu (te) du signal sonore généré (ts') dans les paquets de données (dp),
h) d'un détecteur de phase (PD)
destiné à déterminer une première différence de phase (Δϕ) entre la combinaison de bits (s2) mémorisée en dernier et la combinaison de bits (s2'), du signal sonore généré (ts'), générée en dernier avant l'instant d'insertion (te), et
i) destiné à déterminer une deuxième différence de phase
(Δϕ) entre la combinaison de bits (s1) mémorisée précédemment et la combinaison de bits précédente (s1), du son généré, générée avant l'instant d'insertion (te), et
j) destiné à comparer les première et deuxième différences de phase déterminées (Δϕ) avec une différence de phase prédéfinie (ϕv),
k) le générateur de sons (TG) étant conçu de manière telle que, si les première et deuxième différences de phase déterminées (Δϕ) sont supérieures à la différence de phase prédéfinie (ϕv), la phase du signal sonore généré (ts') soit décalée d'une valeur de phase prédéfinie (ϕ), et
1) l'unité d'insertion/lecture (ELE), la mémoire (SP), le détecteur de phase (PD) et le générateur de sons (TG) étant conçus de manière telle que les étapes g) à k) soient répétées jusqu'à ce que la première ou la deuxième différence de phase déterminée (Δϕ) soit inférieure à la différence de phase prédéterminée (ϕv).

9. Dispositif de réception selon la revendication 8 ou 9, conçu de manière telle que l'on puisse recevoir une information sonore (ti) formée selon le standard RFC-2833, version de mai 2000.
